(19) Europäisches Patentamt
European Patent Office
Office européen des brevets

(11) **EP 3 919 146 A1**

(12) **EUROPEAN PATENT APPLICATION**
published in accordance with Art. 153(4) EPC

(43) Date of publication:
**08.12.2021 Bulletin 2021/49**

(51) Int Cl.:
*A63H 11/00* (2006.01)    *B25J 13/00* (2006.01)
*B25J 13/08* (2006.01)

(21) Application number: **20749649.8**

(22) Date of filing: **27.01.2020**

(86) International application number:
**PCT/JP2020/002685**

(87) International publication number:
**WO 2020/158641 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2019  JP 2019015698**

(71) Applicant: **Sony Group Corporation**
**Tokyo 108-0075 (JP)**

(72) Inventor: **KAWABE, Yusuke**
**Tokyo 108-0075 (JP)**

(74) Representative: **D Young & Co LLP**
**120 Holborn**
**London EC1N 2DY (GB)**

(54) **ROBOT CONTROL DEVICE, ROBOT CONTROL METHOD, AND PROGRAM**

(57)    According to the present disclosure, there is provided a control apparatus for a robot including a decision section that decides that a robot is lifted up, a rotation angle acquisition section that acquires a rotation angle in a case where the robot rotates in a state in which the robot is lifted up, and a driving controlling section that controls driving of a movable portion of the robot on the basis of the rotation angle such that the movable portion is directed to a predetermined direction.

FIG.4

## Description

[Technical Field]

The present disclosure relates to a control apparatus for a robot, a control method for a robot, and a program.

[Background Art]

Conventionally, PTL 1 mentioned below describes that, in regard to a robot apparatus and a control method therefor, acceleration information, and rotation angle information are detected by an acceleration sensor and a rotation angle sensor, respectively, and detected signals are stored in time series into a storage unit and then specific information such as a variance is calculated from the stored time series signal such that a state of the robot apparatus is decided from the specific information.

[Citation List]

[Patent Literature]

[PTL 1]
Japanese Patent No. 4517509

[Summary]

[Technical Problem]

An animal kept as a pet performs various movements in response to communication with a human. Also in retard to a robot or the like, it is desirable that an animal-type robot or the like to perform a motion similar to that of an actual animal.

However, although the technology described in the patent literature mentioned above assumes that a state of a robot is decided on the basis of acceleration information and rotation angle information, it is not assumed that, in a case where a user lifts up the robot, the robot performs a motion similar to that of an actual animal.

Therefore, it is demanded that, in a case where a robot is lifted up by a user, it performs a motion similar to that of an actual animal.

[Solution to Problem]

According to the present disclosure, there is provided a control apparatus for a robot including a decision section that decides that a robot is lifted up, a rotation angle acquisition section that acquires a rotation angle in a case where the robot rotates in a state in which the robot is lifted up, and a driving controlling section that controls driving of a movable portion of the robot on the basis of the rotation angle such that the movable portion is oriented to a predetermined direction.

Further, according to the present disclosure, there is provided a control method for a robot including deciding that the robot is lifted up, acquiring a rotation angle in a case where the robot rotates in a state in which the robot is lifted up, and controlling driving of a movable portion of the robot on the basis of the rotation angle such that the movable portion is oriented to a predetermined direction.

Furthermore, according to the present disclosure, there is provided a program for causing a computer to function as means for deciding that a robot is lifted up, means for acquiring a rotation angle in a case where the robot rotates in a state in which the robot is lifted up, and means for controlling driving of a movable portion of the robot on the basis of the rotation angle such that the movable portion is oriented to a predetermined direction.

[Brief Description of Drawings]

[FIG. 1]

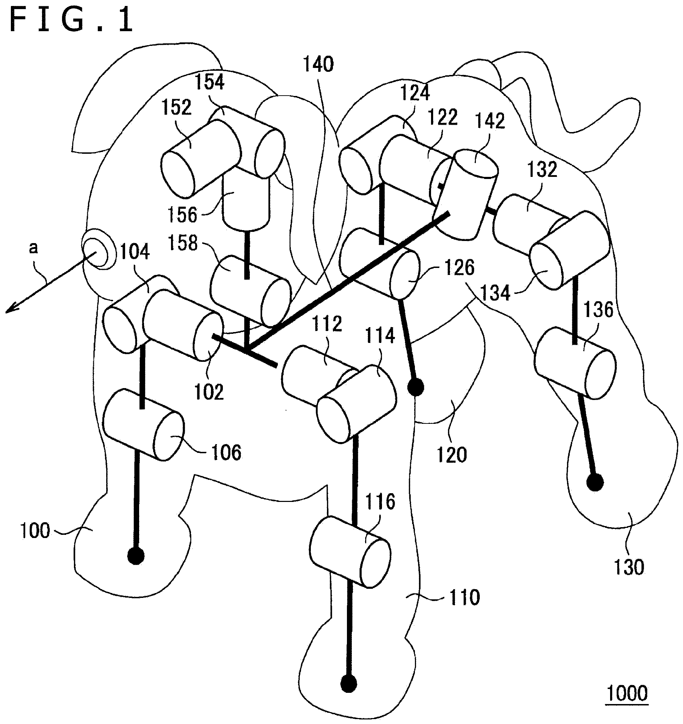

FIG. 1 is a schematic view depicting an appearance of a robot apparatus and rotation axes of joints.
[FIG. 2]

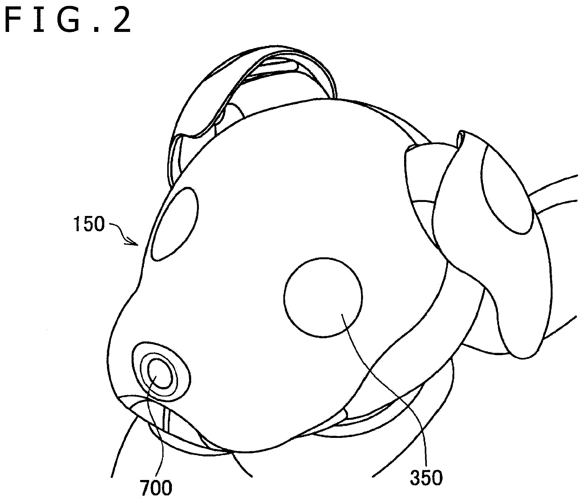

FIG. 2 is a schematic view depicting the head of the robot apparatus.
[FIG. 3]

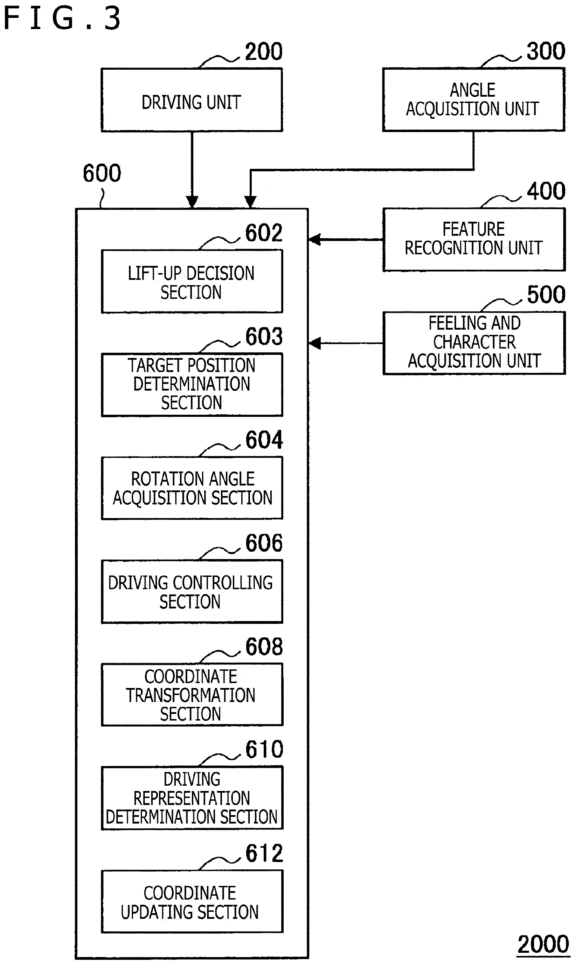

FIG. 3 is a schematic view depicting a configuration of a system for controlling the robot apparatus.
[FIG. 4]

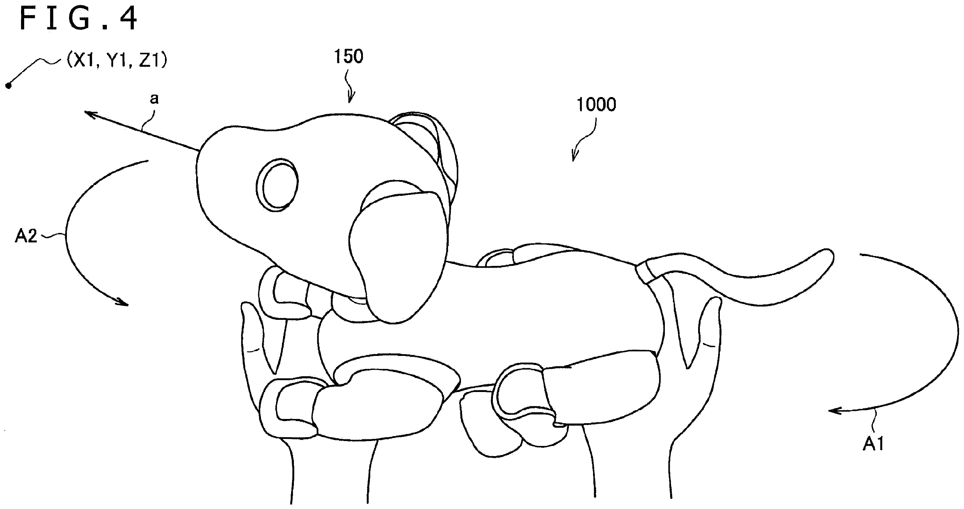

FIG. 4 is a schematic view depicting a state in which a user lifts up the robot apparatus.
[FIG. 5]

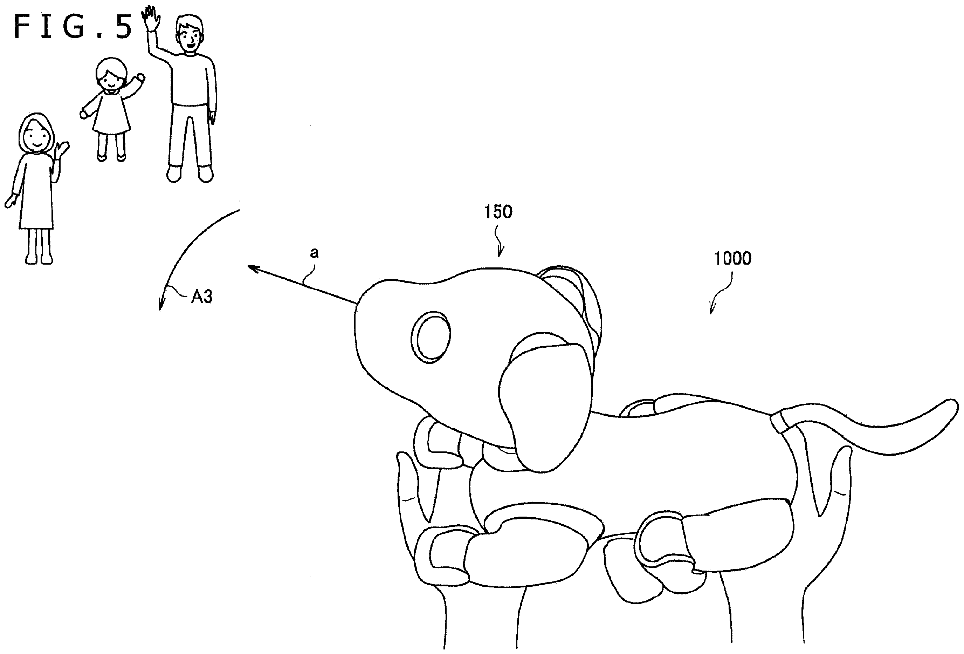

FIG. 5 is a schematic view depicting a method of determining a coordinate of a target position where a plurality of persons exists.
[FIG. 6A]

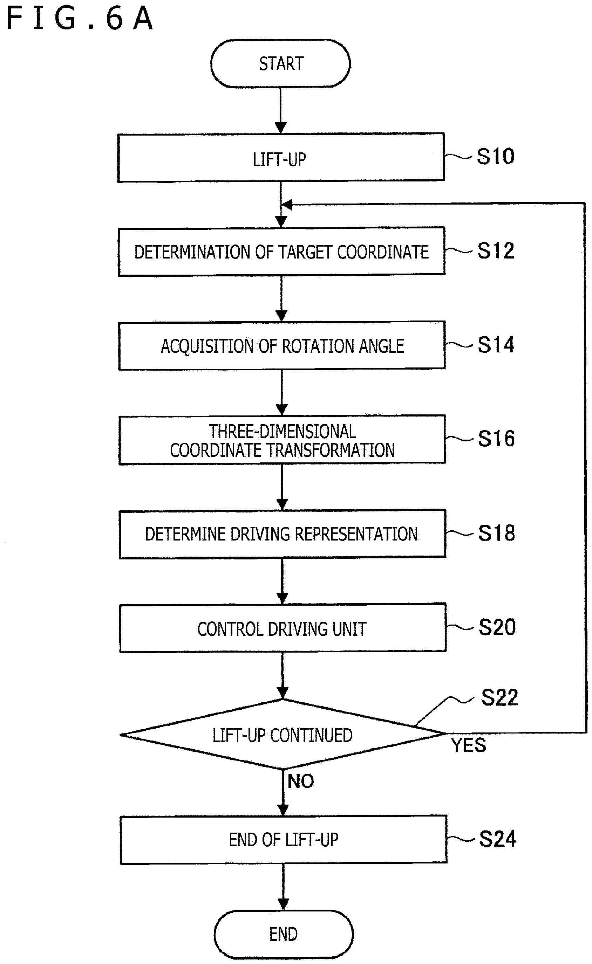

FIG. 6A is a flow chart depicting processing to be executed by a control section.
[FIG. 6B]

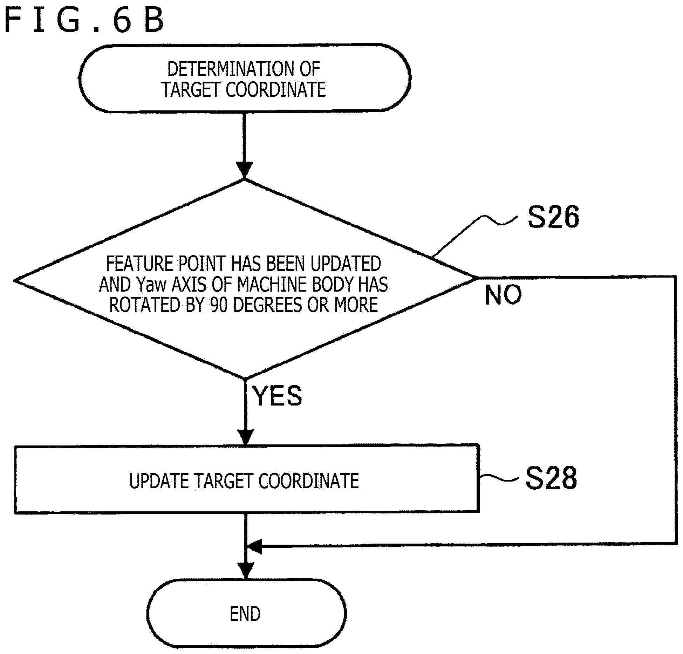

FIG. 6B is a flow chart depicting in detail a process for determining (updating) a target coordinate at step S12 of FIG. 6A.

[Description of Embodiment]

In the following, a preferred embodiment of the present disclosure is described in detail with reference to the accompanying drawings. It is to be noted that, in the present specification and the drawings, like components having substantially like functional configurations are denoted by like reference characters, and overlapping description of them is omitted.

It is to be noted that the description is given in the following order.

1. Configuration of Robot Apparatus
2. Follow-Up Control of Face to Target

3. Control of Face Orientation According to Lift-Up
4. Variations of Control
5. Process Performed by Control Section

1. Configuration of Robot Apparatus

FIG. 1 is a schematic view depicting an appearance of a robot apparatus 1000 according to an embodiment of the present disclosure and rotation axes of joints. The robot apparatus 1000 includes four paws 100, 110, 120, and 130 each of which is driven by an electric motor such as a servo motor.

As depicted in FIG. 1, the robot apparatus 1000 includes a plurality of joint portions. Here, for the convenience of description, the robot apparatus 1000 is classified into a right front paw system, a left front paw system, a right rear paw system, a left rear paw system, a main body (Body) system, and a head system from movements. The right front paw system includes a joint portion 102, another joint portion 104, and a further joint portion 106. The left front paw system includes a joint portion 112, another joint portion 114, and a further joint portion 116. The right rear paw system includes a joint portion 122, another joint portion 124, and a further joint portion 126. The left rear paw system includes a joint portion 132, another joint portion 134, and a further joint portion 136. Further, the main body system includes a joint portion 142. The head system includes a joint portion 152, another joint portion 154, a further joint portion 156, and a still further joint portion 158. The systems are connected to a body 140. It is to be noted that the joint portions depicted in FIG. 1 indicate main joint portions each of which is driven by an electric motor. The robot apparatus 1000 includes, in addition to the joint portions depicted in FIG. 1, joint portions each of which passively moves according to a motion of a different joint portion. Further, the robot apparatus 1000 includes a plurality of movable portions such as a mouth, ears, and a tail, and also the movable portions are each driven by an electric motor or the like.

In FIG. 1, each of the joint portions is indicated by a cylinder. At each joint portion, the center axis of the cylinder corresponds to a rotation axis of the joint portion. In the head system, since the joint portion 152 is provided, a motion of tilting the head in leftward and rightward directions in which the robot apparatus 1000 is viewed from the front is implemented. Meanwhile, in the main body system, since the joint portion 142 is provided, a motion of shaking the hips in the leftward and rightward directions in which the robot apparatus 1000 is viewed from above is implemented. Consequently, more various motions than ever can be implemented by the robot apparatus 1000.

Each of the joint portions is driven by an electric motor (hereinafter referred to simply as motor) such as a servo motor. It is to be noted that the driving source is not limited specifically. The motor at each joint portion is accommodated in one box (case) together with a gear mechanism, an encoder and a microcontroller for driving the motor. The box is configured from a resin material (plastic or the like). By accommodating the motor and the gear mechanism into one box to seal the same, the quietness performance of the robot apparatus 1000 can be enhanced.

Taking the right rear paw system as an example, the motors for the joint portion 132 and the joint portion 134, a gear mechanism, an encoder and a microcontroller are accommodated in one box, and this box configures one rotation shaft. Meanwhile, in the head system, rotation shafts of three axes are configured by the joint portion 152, the joint portion 154, and the joint portion 156.

It is to be noted that, by accommodating rotation shafts of two axes in one box, a spherical joint can be implemented. Further, by accommodating rotation shafts of two axes in one box, the space for the joint portion can be suppressed, and it is possible to determine a shape of the robot apparatus 1000 focusing on the design.

The systems such as the right front paw system and so forth described above are controlled each by a microcomputer included in each joint portion. For example, the joint portion 158 of the head system from among the joint portions is configured such that it is electrically braked. If the joint portion 158 is permitted to freely rotate when the power supply is off or in a like case, then there is the possibility that the head may move down and contact with a hand or the like of the user. Such a situation as just described can be avoided by braking the joint portion 158. The brake can be implemented by a method of deciding rotation of the motor on the basis of electromotive force generated by rotation of the motor of the joint portion 158 when the power supply is off and causing driving force to be generated in a direction opposite to a direction in which the motor tends to rotate.

FIG. 2 is a schematic view depicting the head 150 of the robot apparatus 1000, especially the face. The eyes 350 of the robot apparatus 1000 depicted in FIG. 2 are configured so as to perform various movements and displays according to a motion of the robot apparatus 1000. To this end, the robot apparatus 1000 includes a self-luminous type display device (OLED) in each of left and right eyes 350.

2. Follow-Up Control of Face to Target

Now, follow-up control of the face (head) of the robot apparatus 1000 to an object, which is performed in a case where the robot apparatus 1000 is lifted up by the user, is described. In the robot apparatus 1000 according to the present embodiment, the face can be continuously directed to an interesting object according to a lift-up motion by the user. This motion corresponds to a motion by an animal such as, for example, a dog of continuing, in a case where the dog is lifted up and the direction of the animal is changed, to watch an object of interest even if the orientation of the body changes. By implementing such a motion as just described, the motion of the robot apparatus 1000 can be further imitated to the motion of an actual animal. Then, since the robot apparatus 1000 makes a motion according to a motion of the user, it can be exhibited that the robot apparatus 1000 is interested in the object, and the robot apparatus 1000 can perform a close interaction with the user, and the value of the interaction can be enhanced. It is to be noted that, although, in the following description, follow-up control of the face to an object is described, the face is an example and also an optional movable portion other than the face can be controlled such that the orientation of the movable portion follows up an object. For example, the orientation of a hand may be controlled so as to follow up an object.

FIG. 3 is a schematic view depicting a configuration of a control apparatus 2000 for controlling the robot apparatus 1000 and depicts a configuration for performing follow-up control of the face. The control apparatus 2000 is incorporated in the robot apparatus 1000. As depicted in FIG. 3, the control apparatus 2000 is configured including a driving unit 200, an angle acquisition unit 300, a feature recognition unit 400, a feeling and character acquisition unit 500, and a control section 600.

The driving unit 200 corresponds to the motor, encoder, and gear mechanism of each joint portion. The angle acquisition unit 300 is configured from an inertial measurement unit (IMU: Inertial Measurement Unit), and detects, in a case where the robot apparatus 1000 is lifted up and moved by the user, rotation angles of three axes (yaw, pitch, roll) of the robot apparatus 1000.

The feature recognition unit 400 is configured including a camera and performs an image process for a captured image of the camera to recognize a feature of the captured image. As depicted in FIG. 2, a camera 700 is mounted on the nose of the robot apparatus 1000, and the camera 700 corresponds to a camera of the feature recognition unit 400.

The feature recognition unit 400 can perform, for example, a face recognition process to recognize a person having a specific relationship with the robot apparatus 1000 such as an owner of the robot apparatus 1000 (the person is hereinafter referred to as an owner or the like), a person who is other than the owner or the like and has a high relationship with the robot apparatus 1000, and so forth. It is to be noted that the face recognition process is performed by retaining face images of the owner or the like and persons having a high relationship in advance and comparing the captured face image with the retained face images. Further, the feature recognition unit 400 may include a 3D camera such that the distance to an image capturing target is acquired. Further, the feature recognition unit 400 may include a ToF sensor and may detect depth information of an object from the ToF sensor.

The feeling and character acquisition unit 500 acquires a feeling and a character of the robot apparatus 1000. The robot apparatus 1000 can be set to any one of a plurality of feelings according to a current state. The feeling and character acquisition unit 500 acquires a feeling of the robot apparatus 1000 set for the present point of time. As the feeling to be set, "anger," "pleasure," "sorrow," and so forth available.

Further, the robot apparatus 1000 has a character set congenitally or acquired. The feeling and character acquisition unit 500 acquires the set character of the robot apparatus 1000. As the feeling to be set, "wild," "cute," "shy," "pampered" and so forth are available.

The control section 600 performs follow-up control of the face of the robot apparatus 1000 on the basis of information obtained from the driving unit 200, the angle acquisition unit 300, the feature recognition unit 400, and the feeling and character acquisition unit 500. To this end, the control section 600 is configured including a lift-up decision section 602, a target position determination section 603, a rotation angle acquisition section 604, a driving controlling section 606, a coordinate transformation section 608, a driving representation determination section 610, and a coordinate updating section 612. It is to be noted that the components of the control section 600 can be configured from a circuit (hardware) or from a central processing unit such as a CPU, and a program (software) for causing the central processing unit to function.

## 3. Control of Face Orientation According to Lift-Up

Now, processing performed by the control section 600 is described. FIG. 4 is a schematic view depicting a state in which the user lifts up the robot apparatus 1000. If the robot apparatus 1000 is lifted up by the user, then it is decided by the lift-up decision section 602 of the control section 600 that the robot apparatus 1000 is lifted up. The lift-up decision section 602 decides that the robot apparatus 1000 is lifted up on the basis of information obtained from an IMU of the angle acquisition unit 300, information obtained from a contact detection sensor mounted on the paws or the like of the robot apparatus 1000 and so forth.

Then, in a lifted-up state, the target position determination section 603 determines coordinates of a target position (X1, Y1, Z1) to which a vector (vector a depicted in FIG. 1) indicative of the orientation of the face is directed on the basis of information obtained from then encoder of the driving unit 200. It is to be noted that, in the following description, the vector a is referred to as nose vector a.

In particular, since the angle of each joint portion can be decided from the encoder provided at the joint portion, the nose vector a indicative of the orientation of the face is determined uniquely on the basis of the decided angle. The target position determination section 603 determines, for example, an object existing in the direction of the nose vector a as a target on the basis of the orientation of the face at the timing at which the robot apparatus 1000 is lifted up, and determines the coordinates of the target position on the basis of the distance to the object. It is to be noted that the distance to the object can be detected from the 3D camera and the ToF sensor included in the feature recognition unit 400.

It is to be noted that, while, in the foregoing description, a method of determining a coordinate of a target position on the basis of the orientation of the face at a lift-up timing is indicated, the coordinate of the target position may be, for example, a coordinate indicative of a position of the face of the owner or the like of the robot apparatus 1000, a coordinate indicative of a position of the face of a specific person who is a person other than the owner or the like and whose face image is stored in the robot apparatus 1000, a head coordinate in a lift-up posture or the like obtained from the feature recognition unit 400. Such persons are recognized by the feature recognition unit 400 performing the face recognition process as described above.

The coordinate of the target position is updated when a feature position recognized by the feature recognition unit 400 is updated, in a case where the robot apparatus is rotated by 90 degrees or more on the basis of the rotation angle of the robot apparatus 1000 obtained from the angle acquisition unit 300, or in a like case. The coordinate of the target position is updated by the coordinate updating section 612 of the control section 600.

If a person moves the robot apparatus 1000 after the robot apparatus 1000 is lifted up by the user, then the nose vector a is displaced from the coordinates (X1, Y1, Z1) of the target position. FIG. 4 depicts a manner in which the robot apparatus 1000 is turned in the direction of an arrow mark A1 by the user. At this time, the rotation angle (deviation from the target position) when the person moves the robot apparatus 1000 is acquired by the angle acquisition unit 300.

The rotation angle acquisition section 604 of the control section 600 acquires the rotation angle (deviation) acquired by the angle acquisition unit 300. The coordinate transformation section 608 of the control section 600 performs arithmetic operation of the rotation amount of the face for correcting the rotation angle (coordinate transformation of the target position). The driving controlling section 606 of the control section 600 sends the rotation amount to the driving unit 200 to control rotation of the face. Consequently, the motors of the joint portion 152, the joint portion 154, the joint portion 156, and the joint portion 158 mainly of the head system are controlled to set the direction of the face such that the nose vector a is directed to the coordinates (X1, Y1, Z1) of the target position in response to that the robot apparatus 1000 is moved by the person. In the example of FIG. 4, the orientation of the face rotates in the direction of an arrow mark A2. Consequently, the face can be rotated to the place at which the orientation of the face is locked to the original target position.

In particular, the arithmetic operation of the rotation amount of the face described above by the control section 600 can be performed in the following manner. In a case where α rotation of yaw (Yaw), β rotation of pitch (Pitch), and γ rotation of roll (Roll) are to be performed with respect to the coordinates (X1, Y1, Z1) of the original target position on the basis of the information obtained from the angle acquisition unit 300, the α rotation of the yaw, the β rotation of the pitch, and the γ rotation of the roll are performed successively for the coordinates (X1, Y1, Z1) to calculate coordinates (X4, Y4, Z4) of the target position after correction. It is to be noted that the coordinates of the robot apparatus 1000 itself are (0, 0, 0).

The yaw (Yaw) is α rotated

$$X2 = X1$$

$$Y2 = Y1\cos\alpha - Z1\sin\alpha$$

$$Z2 = Y1\sin\alpha + Z1\cos\alpha$$

The pitch (Pitch) is β rotated

$$X3 = X2\cos\beta + Z2\sin\beta$$

$$Y3 = Y2$$

$$Z3 = - X2\sin\beta + Z2\cos\beta$$

The roll (Roll) is γ rotated

$$X4 = X3\cos\gamma - Y3\sin\gamma$$

$$Y4 = X3\sin\gamma + Y3\cos\gamma$$

$$Z4 = Z3$$

From the foregoing, it can be calculated whether the nose vector a is directed to the target position according to a direction of the nose vector a with respect to the coordinates (0, 0, 0) of the robot apparatus 1000. It is to be noted that the face can be rotated to the place at which the orientation of the face is locked to the original target position by re-adjusting the direction of the face to the target position after correction.

By continuing such control as described above while the robot apparatus 1000 is lifted up, the face can be directed continuously to the target position. Accordingly, such a motion that the orientation of the face of the robot apparatus 1000 follows up an interesting object can be implemented, and it is possible to allow the robot apparatus 1000 to produce a movement with vitality similarly to an actual animal.

## 4. Variations of Control

In the following description, variations of control by the control section 600 are described. The control section 600 performs, in addition to correction of the nose vector a according to angle change amounts upon lift-up described above, change of a representation of a movement for directing the face to the target position according to a feeling or a character of the robot apparatus 1000 and control of the representation by the driving portions such as the eyes 350 other than the head. It is to be noted that, also the control of driving of the eyes 350 is performed by the driving controlling section 606 of the control section 600.

To this end, the driving representation determination section 610 of the control section 600 acquires the feeling and the character of the robot apparatus 1000 acquired by the feeling and character acquisition unit 500 and determines a representation of a movement according to the feeling and the character of the robot apparatus 1000. The driving controlling section 606 controls the driving unit 200 on the basis of the representation of driving determined by the driving representation determination section 610.

Consequently, when the driving controlling section 606 performs control of the orientation of the face on the basis of the rotation angle when a person moves the robot apparatus 1000, it performs control of the orientation of the face taking the feeling and the character of the robot apparatus 1000 acquired from the feeling and character acquisition unit 500 into account.

For example, in a case where the character of the robot apparatus 1000 acquired from the feeling and character acquisition unit 500 is "wild," the movement of the head to the target position is performed faster than usual on the basis of the rotation angle acquired from the angle acquisition unit 300, and it is represented that the character of the robot apparatus 1000 is "wild." On the other hand, in a case where the character of the robot apparatus 1000 acquired from the feeling and character acquisition unit 500 is "shy," the movement of the head to the target position is performed slowly on the basis of the rotation angle acquired from the angle acquisition unit 300, and it is represented that the character of the robot apparatus 1000 is "shy."

Further, in a case where the character of the robot apparatus 1000 acquired from the feeling and character acquisition unit 500 is "shy," the movement of the eyes 350 and the paws other than the head of the robot apparatus 1000 is controlled to perform the representation that the robot apparatus 1000 is shy. For example, by delaying returning to the target position or by performing such a motion as to hide the face with the forepaws, it can be represented that the robot apparatus 1000 is shy.

On the other hand, in a case where the character of the robot apparatus 1000 acquired from the feeling and character acquisition unit 500 is "cute," the movement of the eyes 350 or the paws of the robot apparatus 1000 is controlled so as to perform such a representation that the robot apparatus 1000 behaves prettily. For example, by adding a swinging motion to a returning movement of the head to the target position, by increasing the number of blinks of the eyes 350 or by performing such a motion as to move the forepaws finely, such a representation that the robot apparatus 1000 behaves prettily can be performed.

Further, in a case where the feeling of the robot apparatus 1000 acquired from the feeling and character acquisition unit 500 is "angry," the movement of the head to the target position is performed quickly as if the robot apparatus 1000 were angry on the basis of the rotation angle acquired from the angle acquisition unit 300.

When the driving controlling section 606 of the control section 600 performs control of the orientation of the face on the basis of the rotation angle when a person moves the robot apparatus 1000, also it is possible to change the representation of the movement of orienting the face to the target position or perform control of the representation by the driving unit other than that for the head such as the driving units for the eyes 350 on the basis of the magnitude of the rotation angle.

For example, in a case where the rotation angle is greater than a predetermined value, the display of the eyes 350 is controlled such that the eyes 350 of the robot apparatus 1000 represent a surprised state. Further, in a case where the rotation angle is greater than the predetermined value, the driving controlling section 606 performs control of the driving unit 200 such that such a danger avoidance posture as to hide the face with the forepaws is taken.

On the other hand, in a case where the rotation angle is smaller than the predetermined value, the controlling speed for orienting the face to the target position may be controlled so as to change in response to a variation of the rotation angle (rotation angular speed) acquired from the angle acquisition unit 300. On the other hand, in a case where the rotation angle is greater than the predetermined value, the controlling speed for orienting the face to the target position may be controlled so as to be fixed.

Furthermore, the locus of orienting the face to the target position may not be the shortest locus but can be changed in response to the feeling or the rotation angle (deviation) of the robot apparatus 1000. For example, in a case where the feeling of the robot apparatus 1000 is "shy," the locus for orienting the face to the target position is not determined as the shortest locus, and a surplus locus may be added such that it is represented that the robot apparatus 1000 is shy.

FIG. 5 is a schematic view depicting a method of determining a coordinate of a target position in a case where a plurality of persons exists. In the case where a plurality of persons exists, the robot apparatus 1000 turns the head to the direction of an arrow mark A3 to perform a movement for overlooking and scanning the plurality of persons and updates a person, who is recognized in advance such as the owner, as a target coordinate. Further, in a case where a plurality of persons exists, the central person may be determined as a coordinate of the target position. Further, voice of a person may be acquired such that the direction in which the voice comes is determined as a target position.

5. Process Executed by Control Section

FIG. 6A is a flow chart depicting processing performed by the control section 600. First at step S10, the user will lift up the robot apparatus 1000. At the next step S12, a target coordinate (X1, Y1, Z1) is determined. At the next step S14, a rotation angle when the user moves the robot apparatus 1000 is acquired from the angle acquisition unit 300.

At the next step S16, the control section 600 performs three-dimensional coordinate transformation by the method described hereinabove on the basis of the rotation angle acquired from the angle acquisition unit 300. At the next step S18, the control section 600 determines a driving representation on the basis of the feeling and the character of the robot apparatus 1000 acquired by the feeling and character acquisition unit 500. At the next step S20, the control section 600 controls the driving unit 200 such that the nose vector a is directed to the target position.

Further at step S20, the control section 600 controls the driving unit 200 on the basis of the driving representation determined at step S18. Consequently, control of the driving unit 200 is performed according to the feeling and the character.

At the next step S22, the control section 600 decides whether or not the lift-up of the robot apparatus 1000 by the user continues, and in a case where the lift-up continues, the processing returns to step S12 to perform the processes beginning with step S12. On the other hand, in a case where the lift-up does not continue, the control section 600 ends the lift-up (step S24) and ends its processing.

FIG. 6B is a flow chart depicting the process of determining (updating) the target coordinate at step S12 of FIG. 6A in detail. At step S26, the control section 600 decides whether or not the feature point obtained by image recognition by the feature recognition unit 400 has been updated or whether or not the yaw axis of the robot apparatus 1000 has rotated by 90 degrees or more. In a case where it is decided at step S26 that the feature point has been updated or the yaw axis of the robot apparatus 1000 has rotated by 90 degrees or more, the processing advances to step S28, at which the control section 600 updates the target coordinate. After step S28, the control section 600 ends the processing. On the other hand, in a case where it is decided at step S26 that the feature point has not been updated and besides the yaw axis of the robot apparatus 1000 has not rotated by 90 degrees or more, the control section 600 ends the processing without advancing the processing to step S28.

The preferred embodiment of the present disclosure has been described in detail with reference to the accompanying drawings, the technical scope of the present disclosure is not restricted to such an example as described above. It is apparent that those having common knowledge in the technical field of the present disclosure could conceive various alterations or modifications within the scope of the technical idea described in the claims, and it is recognized that also they belong naturally to the technical scope of the present disclosure.

Further, the advantageous effects described in the present specification are explanatory or exemplary to the last and are not restrictive. In those, the technology according to the present disclosure can demonstrate, together with the advantageous effects described hereinabove or in place of the advantageous effects described above, other advantageous effects that are apparent to those skilled in the art.

It is to be noted that also such configurations as described below belong to the technical scope of the present disclosure.

(1)
A control apparatus for a robot, including:

a decision section that decides that a robot is lifted up;
a rotation angle acquisition section that acquires a rotation angle in a case where the robot rotates in a state in which the robot is lifted up; and
a driving controlling section that controls driving of a movable portion of the robot on the basis of the rotation angle such that the movable portion is oriented to a predetermined direction.

(2)
The control apparatus for a robot according to (1) above, further including:
a target position determination section that determines a position of an object existing in the predetermined direction as a target position to which the movable portion is to be oriented.

(3)
The control apparatus for a robot according to (2) above, in which the target position determination section determines the position of the object to which the movable portion is oriented at a point of time at which the robot is lifted up as the target position.

(4)
The control apparatus for a robot according to (2) above, further including:

a feature recognition unit that recognizes a feature of the object that is specific and exists in the predetermined direction, in which
the target position determination section determines the position of the object that is specific and is recognized by the feature recognition unit, as the target position.

(5)
The control apparatus for a robot according to (4) above, in which

the feature recognition unit performs face recognition, and
the object that is specific is a person having a specific relation to the robot.

(6)
The control apparatus for a robot according to any one of (2) to (5) above, further including:

a coordinate transformation section that performs coordinate transformation of the target position on the basis of the rotation angle, in which the driving controlling section controls driving of the movable portion such that the movable portion is oriented to the target position that is coordinate-transformed.

(7)
The control apparatus for a robot according to any one of (2) to (6) above, further including:
an updating section that updates the target position when the robot performs a predetermined motion.
(8)
The control apparatus for a robot according to any one of (1) to (7) above, further including:

an acquisition section that acquires information related to a feeling or a character set to the robot; and
a representation determination section that determines a representation of a movement of the movable portion on the basis of the information related to the feeling or the character, in which the driving controlling section controls the movement of the movable portion on the basis of the representation.

(9)
A control method for a robot, including:

deciding that the robot is lifted up;
acquiring a rotation angle in a case where the robot rotates in a state in which the robot is lifted up; and
controlling driving of a movable portion of the robot on the basis of the rotation angle such that the movable portion is oriented to a predetermined direction.

(10)
A program for causing a computer to function as:

means for deciding that a robot is lifted up;
means for acquiring a rotation angle in a case where the robot rotates in a state in which the robot is lifted up; and
means for controlling driving of a movable portion of the robot on the basis of the rotation angle such that the movable portion is oriented to a predetermined direction.

[Reference Signs List]

602:     Lift-up decision section
603:     Target position determination section
604:     Rotation angle acquisition section
606:     Driving controlling section
608:     Coordinate transformation section
610:     Driving representation determination section
1000:    Robot apparatus
2000:    Control apparatus

**Claims**

1. A control apparatus for a robot, comprising:

a decision section that decides that a robot is lifted up;
a rotation angle acquisition section that acquires a rotation angle in a case where the robot rotates in a state in which the robot is lifted up; and
a driving controlling section that controls driving of a movable portion of the robot on a basis of the rotation angle such that the movable portion is oriented to a predetermined direction.

2. The control apparatus for a robot according to claim 1, further comprising:
a target position determination section that determines a position of an object existing in the predetermined direction as a target position to which the movable portion is to be oriented.

3. The control apparatus for a robot according to claim 2, wherein the target position determination section determines the position of the object to which the movable portion is oriented at a point of time at which the robot is lifted up as the target position.

4. The control apparatus for a robot according to claim 2, further comprising:

a feature recognition unit that recognizes a feature of the object that is specific and exists in the predetermined direction, wherein
the target position determination section determines the position of the object that is specific and is recognized by the feature recognition unit, as the target position.

5. The control apparatus for a robot according to claim 4, wherein

the feature recognition unit performs face recognition, and
the object that is specific is a person having a specific relation to the robot.

6. The control apparatus for a robot according to claim 2, further comprising:

a coordinate transformation section that performs coordinate transformation of the target position on a basis of the rotation angle, wherein the driving controlling section controls driving of the movable portion such that the movable portion is oriented to the target position that is coordinate-transformed.

7. The control apparatus for a robot according to claim 2, further comprising:
an updating section that updates the target position when the robot performs a predetermined motion.

8. The control apparatus for a robot according to claim 1, further comprising:

an acquisition section that acquires information related to a feeling or a character set to the robot; and
a representation determination section that determines a representation of a movement of the movable portion on a basis of the information related to the feeling or the character, wherein the driving controlling section controls the movement of the movable portion on a basis of the representation.

9. A control method for a robot, comprising:

deciding that the robot is lifted up;
acquiring a rotation angle in a case where the robot rotates in a state in which the robot is lifted up; and
controlling driving of a movable portion of the robot on a basis of the rotation angle such that the movable portion is oriented to a predetermined direction.

10. A program for causing a computer to function as:

means for deciding that a robot is lifted up;
means for acquiring a rotation angle in a case where the robot rotates in a state in which the robot is lifted up; and

means for controlling driving of a movable portion of the robot on a basis of the rotation angle such that the movable portion is oriented to a predetermined direction.

# FIG.1

# F I G . 2

# FIG.3

```
┌──────────────────────┐          ┌──────────────────────┐
│      ～200            │          │      ～300            │
│   DRIVING UNIT        │          │      ANGLE           │
│                       │          │ ACQUISITION UNIT     │
└──────────────────────┘          └──────────────────────┘
```

600

```
┌──────────────────────────────────┐          ┌──────────────────────┐
│              ～602                │ ◄────────│      ～400            │
│   ┌──────────────────────┐        │          │     FEATURE          │
│   │  LIFT-UP DECISION     │        │          │ RECOGNITION UNIT     │
│   │    SECTION            │        │          └──────────────────────┘
│   └──────────────────────┘        │          ┌──────────────────────┐
│              ～603                │          │      ～500            │
│   ┌──────────────────────┐        │ ◄────────│   FEELING AND        │
│   │  TARGET POSITION      │        │          │   CHARACTER          │
│   │  DETERMINATION        │        │          │ ACQUISITION UNIT     │
│   │    SECTION            │        │          └──────────────────────┘
│   └──────────────────────┘        │
│              ～604                │
│   ┌──────────────────────┐        │
│   │  ROTATION ANGLE       │        │
│   │ ACQUISITION SECTION   │        │
│   └──────────────────────┘        │
│              ～606                │
│   ┌──────────────────────┐        │
│   │ DRIVING CONTROLLING   │        │
│   │    SECTION            │        │
│   └──────────────────────┘        │
│              ～608                │
│   ┌──────────────────────┐        │
│   │   COORDINATE          │        │
│   │  TRANSFORMATION       │        │
│   │    SECTION            │        │
│   └──────────────────────┘        │
│              ～610                │
│   ┌──────────────────────┐        │
│   │    DRIVING            │        │
│   │  REPRESENTATION       │        │
│   │ DETERMINATION SECTION │        │
│   └──────────────────────┘        │
│              ～612                │
│   ┌──────────────────────┐        │
│   │   COORDINATE          │        │
│   │  UPDATING SECTION     │        │
│   └──────────────────────┘        │
└──────────────────────────────────┘
```

2000

# FIG.4

(X1, Y1, Z1)

a

150

1000

A2

A1

EP 3 919 146 A1

FIG.5

# FIG.6A

```
                    ( START )
                        │
                        ▼
        ┌───────────────────────────────┐
        │           LIFT-UP             │──── S10
        └───────────────────────────────┘
                        │
                        ▼ ◄─────────────────────────┐
        ┌───────────────────────────────┐          │
        │  DETERMINATION OF TARGET       │──── S12  │
        │          COORDINATE            │          │
        └───────────────────────────────┘          │
                        │                           │
                        ▼                           │
        ┌───────────────────────────────┐          │
        │   ACQUISITION OF ROTATION      │──── S14  │
        │            ANGLE               │          │
        └───────────────────────────────┘          │
                        │                           │
                        ▼                           │
        ┌───────────────────────────────┐          │
        │      THREE-DIMENSIONAL         │──── S16  │
        │   COORDINATE TRANSFORMATION    │          │
        └───────────────────────────────┘          │
                        │                           │
                        ▼                           │
        ┌───────────────────────────────┐          │
        │  DETERMINE DRIVING REPRESENTATION │─ S18  │
        └───────────────────────────────┘          │
                        │                           │
                        ▼                           │
        ┌───────────────────────────────┐          │
        │      CONTROL DRIVING UNIT      │──── S20  │
        └───────────────────────────────┘          │
                        │                           │
                        ▼            S22            │
                    ◇───────────────◇              │
                   ╱                 ╲              │
                  ◇  LIFT-UP CONTINUED ◇── YES ─────┘
                   ╲                 ╱
                    ◇───────────────◇
                        │ NO
                        ▼
        ┌───────────────────────────────┐
        │       END OF LIFT-UP          │──── S24
        └───────────────────────────────┘
                        │
                        ▼
                    (  END  )
```

# F I G . 6 B

```
┌─────────────────────────┐
│   DETERMINATION OF      │
│   TARGET COORDINATE     │
└─────────────────────────┘
```

FEATURE POINT HAS BEEN UPDATED
AND Yaw AXIS OF MACHINE BODY HAS
ROTATED BY 90 DEGREES OR MORE

S26

NO

YES

UPDATE TARGET COORDINATE   S28

END

## INTERNATIONAL SEARCH REPORT

| International application No. |
|---|
| PCT/JP2020/002685 |

| A. CLASSIFICATION OF SUBJECT MATTER |
|---|
| A63H 11/00(2006.01)i; B25J 13/00(2006.01)i; B25J 13/08(2006.01)i<br>FI: B25J13/08 Z; B25J13/00 Z; A63H11/00 Z |

According to International Patent Classification (IPC) or to both national classification and IPC

| B. FIELDS SEARCHED |
|---|

| Minimum documentation searched (classification system followed by classification symbols) |
|---|
| A63H11/00; B25J13/00; B25J13/08 |

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | WO 2018/016461 A1 (GROOVE X, INC.) 25.01.2018 (2018-01-25) paragraphs [0148]-[0155], fig. 12-14 | 1-2, 4-6, 8-10 |
| A | JP 2003-266348 A (SONY CORP.) 24.09.2003 (2003-09-24) entire text, all drawings | 1-10 |
| A | JP 2003-311028 A (MATSUSHITA ELECTRIC INDUSTRIAL CO., LTD.) 05.11.2003 (2003-11-05) entire text, all drawings | 1-10 |
| A | WO 2018/084170 A1 (GROOVE X, INC.) 11.05.2018 (2018-05-11) entire text, all drawings | 1-10 |
| A | WO 2018/012219 A1 (GROOVE X, INC.) 18.01.2018 (2018-01-18) entire text, all drawings | 1-10 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 March 2020 (05.03.2020) | 17 March 2020 (17.03.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT

Information on patent family members

| International application No. |
| --- |
| PCT/JP2020/002685 |

| Patent Documents referred in the Report | Publication Date | Patent Family | Publication Date |
| --- | --- | --- | --- |
| WO 2018/016461 A1 | 25 Jan. 2018 | US 2019/0143528 A1 paragraphs [0218]-[0227], fig. 12-14 GB 2567586 A DE 112017003651 T5 CN 109475781 A | |
| JP 2003-266348 A | 24 Sep. 2003 | (Family: none) | |
| JP 2003-311028 A | 05 Nov. 2003 | (Family: none) | |
| WO 2018/084170 A1 | 11 May 2018 | (Family: none) | |
| WO 2018/012219 A1 | 18 Jan. 2018 | US 2019/0126157 A1 whole document GB 2565959 A DE 112017003480 T5 CN 109414623 A | |

Form PCT/ISA/210 (patent family annex) (January 2015)

**EP 3 919 146 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4517509 B